# EUROPEAN PATENT SPECIFICATION

(11) **EP 3 719 650 B1**
(45) Date of publication and mention of the grant of the patent: **12.05.2021**
(21) Application number: 20156989.4
(22) Date of filing: 12.02.2020
(51) Int. Cl.: G06F 11/20

(54) **VEHICLE COMMUNICATION SYSTEM**
FAHRZEUGKOMMUNIKATIONSSYSTEM
SYSTÈME DE COMMUNICATION DE VÉHICULE

(30) Priority: 15.03.2019 JP 2019048614
(43) Date of publication of application: 07.10.2020
(73) Proprietor: YAZAKI CORPORATION, Minato-ku, Tokyo 108-8333 (JP)
(72) Inventor: NAKAHARA, Takahiro, Susono-shi, Shizuoka 410-1194 (JP); UEDA, Takayuki, Susono-shi, Shizuoka 410-1194 (JP); YANAGIDA, You, Susono-shi, Shizuoka 410-1194 (JP)
(74) Representative: Grünecker Patent- und Rechtsanwälte PartG mbB

(56) References cited:
- US-A1- 2007 073 875

## Description

### BACKGROUND OF THE INVENTION

### 1. Field of the Invention

The present invention relates to a vehicle communication system.

### 2. Description of the Related Art

Document US 2007/073875 A1 describes a computer system and boot control method, wherein booting is performed by a storage area network and a spare (secondary) computer can take over operation of a failing computer.

Examples of a conventional vehicle communication system include a communication system that includes a switching hub for connecting between a plurality of on-vehicle devices and performs communications between the on-vehicle devices via the switching hub. The switching hub has a memory, and the memory has setting information stored therein that is used for setting the operation of the switching hub. Japanese Patent Application Laid-open No. 2016-212044 discloses a communication apparatus that prevents transmission of incorrect messages by limiting write and read into a register.

The communication system as described above operates, for example, with the setting information read by the switching hub from the memory. At times, however, the switching hub fails to read the setting information from the memory and consequently fails to operate normally, which may degrade the reliability of the communication system.

### SUMMARY OF THE INVENTION

Given this inconvenience, the present invention has been made to provide a vehicle communication system the reliability of which can be prevented from degrading.

This is achieved by the features of the independent claims.

According to an aspect of the present invention, in the vehicle communication system, it is preferable that the vehicle is segmented into a plurality of regions, the regions include a unit region that is a region including two or more of the transfer units, and each of the transfer units included in the unit region stores therein the setting information applicable to that transfer unit and the other transfer unit or units in the unit region and does not store therein any of the setting information applicable to the other transfer units in the other regions.

According to still another aspect of the present invention, in the vehicle communication system, it is preferable that when the transfer units include a plurality of acquirement-disabled transfer units that are not enabled to acquire the setting information applicable to and stored in the storage sections in these acquirement-disabled transfer sections units and include at least one acquirement-enabled transfer unit that is enabled to acquire the setting information applicable to and stored in that acquirement-enabled transfer unit, each of the plurality of acquirement-disabled transfer units operates based on the setting information applicable to that acquirement-disabled transfer unit and acquired from the storage section in the same one of the at least one acquirement-enabled transfer unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating an example of the configuration of a vehicle communication system according to a first embodiment;
FIG. 2 is a block diagram illustrating an example of the operation of the vehicle communication system according to the first embodiment;
FIG. 3 is a flowchart illustrating an example of the operation of the vehicle communication system according to the first embodiment;
FIG. 4 is a block diagram illustrating an example of the operation of a vehicle communication system according to a second embodiment; and
FIG. 5 is a block diagram illustrating an example of the configuration of a vehicle communication system according to a modification of a third embodiment.

### DETAILED DESCRIPTION OF THE PREFERRED EMBODIMENTS

With reference to the drawings, the following details modes (embodiments) for carrying out the present invention. Descriptions in the following embodiments are not intended to limit the present invention. The constituent elements described below include those that can be easily conceived by the skilled person and those that are substantially the same. Furthermore, the configurations described below can be combined as appropriate. Various omissions, substitutions, and changes can be made to the configurations without departing from the scope of the present invention.

### First Embodiment

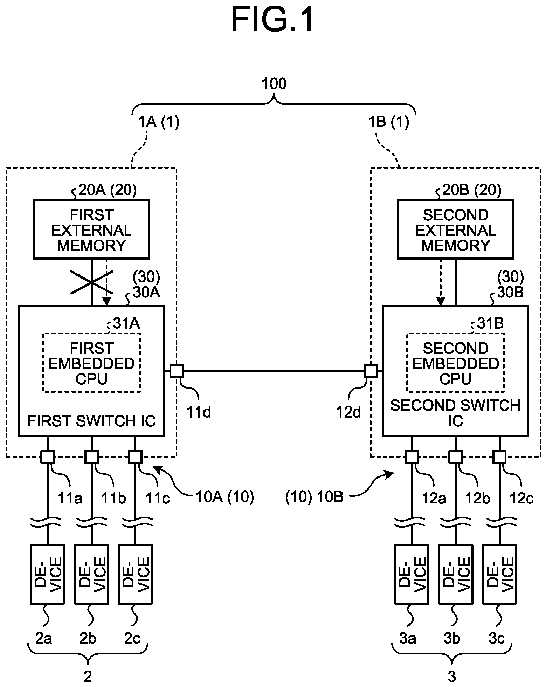

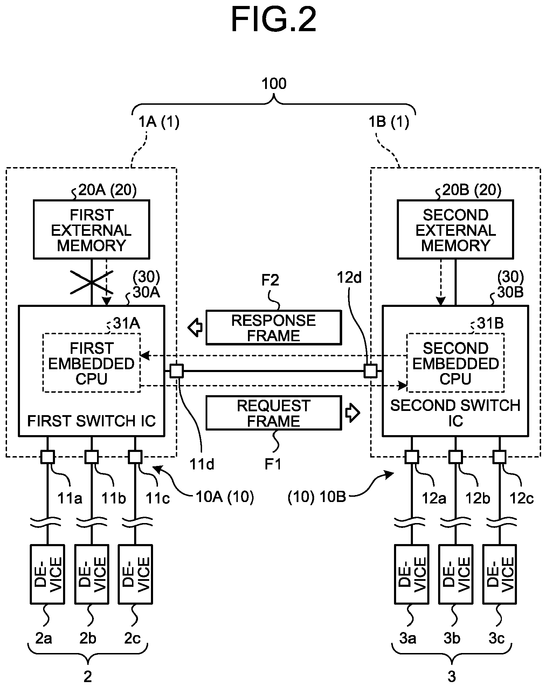

A vehicle communication system 100 according to an embodiment is described with reference to the drawings. FIG. 1 is a block diagram illustrating an example of the configuration of the vehicle communication system 100 according to the embodiment. FIG. 2 is a block diagram illustrating an example of the operation of the vehicle communication system 100 according to the embodiment. The vehicle communication system 100 is a system installed in a vehicle and configured to connect a plurality of devices 2 and 3 in the vehicle so that the devices 2 and 3 can communicate with each other. The vehicle communication system 100 includes a plurality of switching hubs 1 as a plurality of transfer units. The respective switching hubs 1 have pluralities of devices 2 and 3 and transfer information to the pluralities of devices 2 and 3. Each of the switching hubs 1 constitutes an on-vehicle local area network (LAN), which is a communication network provided in the vehicle. For example, the communication standard for Ethernet (registered trademark) is applied to the on-vehicle LAN. This example, however, is not limiting.

Each of the switching hubs 1 includes an input-output interface 10, an external memory 20, and a switch integrated circuit (IC) 30 as a transfer section. In the first embodiment, the switching hubs 1 include a first switching hub 1A and a second switching hub 1B. The first switching hub 1A includes a first input-output interface 10A, a first external memory 20A, and a first switch IC 30A as illustrated FIG. 1.

The first input-output interface 10A is an interface to be connected to various devices. The first input-output interface 10A is connected to the first switch IC 30A and is connected via communication lines to the devices 2. The first input-output interface 10A includes ports 11a to 11d. The ports 11a, 11b, and 11c are connected to devices 2a, 2b, and 2c, respectively, via communication lines. The port 11d is connected to the second switching hub 1B via a communication line.

The first external memory 20A stores information therein. The first external memory 20A is, for example, a non-volatile memory and is made of a magnetic storage apparatus, an optical disc, or a flash memory. The first external memory 20A is provided outside the first switch IC 30A and is connected via a communication line to the first switch IC 30A. The first external memory 20A has information stored therein that is needed for putting the switch ICs 30 corresponding to the first external memory 20A and the other external memory or memories into operation. The first external memory 20A has setting information stored therein that is used for, for example, setting operation of the first and a second switch ICs 30A and 30B. The first external memory 20A may have, for example, setting information for all of the switches IC 30 included in the vehicle communication system 100. The setting information applicable to the first switch IC 30A contains, for example, a routing table. In this routing table, the respective MAC addresses of the devices 2 are associated with port numbers assigned in the first input-output interface 10A. For example, the MAC address of the device 2a is associated with the port number of the port 11a, the MAC address of the device 2b with the port number of the port 11b, the MAC address of the device 2c with the port number of the port 11c, and the MAC address of the second switching hub 1B with the port number of the port 11d.

The first switch IC 30A is connected to the devices 2 to execute a process to transfer information to each of the devices 2. The first switch IC 30A is an electronic part obtained by forming elements such as a transistor, a resistance, and a capacitor on a circuit board. The first switch IC 30A includes a first embedded central processing unit (CPU) 31A. The first embedded CPU 31A is mounted on the circuit board for the first switch IC 30A and embedded in the first switch IC 30A. The first embedded CPU 31A is connected to the first external memory 20A and is connected via the first input-output interface 10A to the devices 2 and the second switching hub 1B.

The first embedded CPU 31A operates after reading setting information applicable to the first embedded CPU 31A from the first external memory 20A. For example, when the first switching hub 1A is powered on and started up, the first embedded CPU 31A reads the setting information applicable thereto from the first external memory 20A. The first embedded CPU 31A writes the read setting information applicable thereto into an internal memory (not illustrated) in the first switch IC 30A and operates based on the setting information thus written into the internal memory.

After the startup, the first embedded CPU 31A transmits information to each of the devices 2 based on the routing table contained in the setting information applicable to the first embedded CPU 31A. The first embedded CPU 31A refers to the routing table, for example, when an Ethernet frame is output from the second switching hub 1B. The first embedded CPU 31A then compares a destination MAC address contained in the Ethernet frame with the respective MAC addresses of the devices 2 that have been registered in the routing table. The first embedded CPU 31A then detects the MAC address of the device 2 that is identical to the destination MAC address, and acquires the port number associated with the detected MAC address of the device 2. The first embedded CPU 31A then outputs the Ethernet frame to one of the ports 11a to 11c that is indicated by the acquired port number.

The second switching hub 1B is configured in the same manner as the first switching hub 1A described above. Specifically, the second switching hub 1B includes a second input-output interface 10B, a second external memory 20B, and a second switch IC 30B as a transfer section.

The second input-output interface 10B is an interface to be connected to various devices. The second input-output interface 10B is connected to the second switch IC 30B and is connected via communication lines to the devices 3. The second input-output interface 10B is configured by including ports 12a to 12d. The ports 12a, 12b, and 12c are connected to devices 3a, 3b, and 3c, respectively, via communication lines. The port 12d is connected to the first switching hub 1A via a communication line.

The second external memory 20B stores information therein. The second external memory 20B is, for example, a non-volatile memory and is made of a magnetic storage apparatus, an optical disc, or a flash memory. The second external memory 20B is provided outside the second switch IC 30B and is connected to the second switch IC 30B via a communication line. The second external memory 20B has information stored therein that is needed for putting the switch ICs 30 corresponding to the second external memory 20B and the other external memory or memories into operation. The second external memory 20B has setting information stored therein that is used for, for example, setting operation of the first and the second switch ICs 30A and 30B. The second external memory 20B may have, for example, setting information applicable to all of the switches IC 30 included in the vehicle communication system 100. The setting information applicable to the second switch IC 30B contains, for example, a routing table. In this routing table, the respective MAC addresses of the devices 3 are associated with port numbers assigned in the second input-output interface 10B. For example, the MAC address of the device 3a is associated with the port number of the port 12a, the MAC address of the device 3b with the port number of the port 12b, the MAC address of the device 3c with the port number of the port 12c, and the MAC address of the first switching hub 1A with the port number of the port 12d.

The second switch IC 30B is connected to a plurality of devices 3 to execute a process to transfer information to each of the devices 3. The second switch IC 30B is an electronic part obtained by forming elements such as a transistor, a resistance, and a capacitor on a circuit board. The second switch IC 30B includes a second embedded CPU 31B. The second embedded CPU 31B is mounted on the circuit board for the second switch IC 30B and embedded in the second switch IC 30B. The second embedded CPU 31B is connected to the second external memory 20B and is connected via the second input-output interface 10B to the devices 3 and the first switching hub 1A.

The second embedded CPU 31B operates after reading setting information applicable to the second embedded CPU 31B from the second external memory 20B. For example, when the second switching hub 1B is powered on and started up, the second embedded CPU 31B reads the setting information applicable thereto from the second external memory 20B. The second embedded CPU 31B writes the read setting information applicable thereto into an internal memory (not illustrated) in the second switch IC 30B and operates based on the setting information thus written into the internal memory.

After the startup, the second embedded CPU 31B transmits information to each of the devices 3 based on the routing table contained in the setting information applicable to the second embedded CPU 31B. The second embedded CPU 31B refers to the routing table, for example, when an Ethernet frame is output from the first switching hub 1A. The second embedded CPU 31B then compares a destination MAC address contained in the Ethernet frame with the respective MAC addresses of the devices 3 that have been registered in the routing table. The second embedded CPU 31B then detects the MAC address of the device 3 that is identical to the destination MAC address, and acquires the port number associated with the detected MAC address of the device 3. The second embedded CPU 31B then outputs the Ethernet frame to one of the ports 12a to 12c that is indicated by the acquired port number.

Described next is a case when the first embedded CPU 31A fails to read the setting information applicable to the first embedded CPU 31A from the first external memory 20A. When failing to read the setting information applicable thereto from the first external memory 20A, the first embedded CPU 31A operates based on setting information applicable thereto acquired from another switching hub 1, for example, the second external memory 20B in the second switching hub 1B. The following details a case when failure to read the setting information applicable to the first embedded CPU 31A occurs.

The first embedded CPU 31A reads the setting information applicable to the first embedded CPU 31A from the first external memory 20A when the first switching hub 1A is started up. However, the first embedded CPU 31A fails to read the setting information applicable thereto from the first external memory 20A, for example, when the first external memory 20A is out of order. Upon occurrence of such a read error, the first embedded CPU 31A transmits, to the second switching hub 1B, a request frame F1 indicating a request for transmission of the setting information of the first embedded CPU 31A, as illustrated FIG. 2. Upon receiving the request frame F1 from the first switching hub 1A, the second embedded CPU 31B of the second switching hub 1B reads the setting information applicable to the first switch IC 30A and stored in the second external memory 20B. The second embedded CPU 31B then transmits, to the first switching hub 1A, a response frame F2 containing the read setting information applicable to the first switch IC 30A. The first embedded CPU 31A in the first switching hub 1A operates based on the setting information applicable thereto contained in the response frame F2 transmitted from the second switching hub 1B.

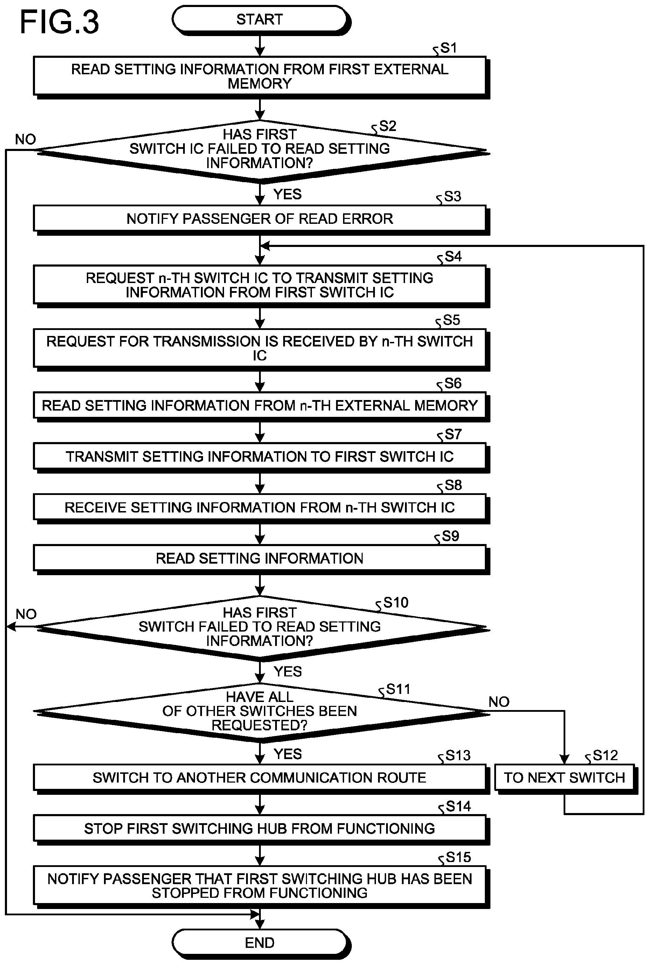

Next described is an example of the operation of the vehicle communication system 100 according to the embodiment. FIG. 3 is a flowchart illustrating an example of the operation of the vehicle communication system 100 according to the embodiment. The first switch IC 30A (the first embedded CPU 31A) reads setting information from the first external memory 20A (step S1). If the first switch IC 30A has failed to read the setting information from the first external memory 20A (Yes at step S2), the first switch IC 30A notifies a passenger of a read error using a warning lamp or the like not illustrated (step S3).

Subsequently, the first switch IC 30A requests an n-th switch IC 30 to transmit setting information (step S4). The n-th switch IC 30 is the n-th switch IC 30. In this example, the first switch IC 30A transmits, to the second switch IC 30B, the request frame F1 indicating a request for transmission of the setting information. Subsequently, the n-th switch IC 30 receives the transmission request from the first switch IC 30A (step S5). In this example, the second switch IC 30B receives the request frame F1 transmitted from the first switch IC 30A.

Subsequently, the n-th switch IC 30 reads setting information from an n-th external memory 20 (step S6). In this example, the second switch IC 30B reads the setting information applicable to the first switch IC 30A and stored in the second external memory 20B. Subsequently, the n-th switch IC 30 transmits the setting information to the first switch IC 30A (step S7). In this example, the second switch IC 30B transmits, to the first switch IC 30A, the response frame F2 containing the read setting information applicable to the first switch IC 30A. Subsequently, the first switch IC 30A receives the setting information from the n-th switch IC 30 (step S8). In this example, the first switch IC 30A receives the response frame F2 containing the setting information applicable to the first switch IC 30A from the second switch IC 30B. Subsequently, the first switch IC 30A reads the setting information contained in a response frame F2 received thereby (step S9). When the first switch IC 30A fails to read the setting information applicable thereto contained in the response frame F2 (Yes at step S10), the first switch IC 30A determines whether all of the other switches IC 30 have been requested to transmit the setting information (step S11).

If any of the other switches IC 30 has not been requested to transmit the setting information (No at step S11), the first switch IC 30A requests the (n+1)-th switch IC 30 (for example, a third switch IC 30) that is the subsequent switch IC 30 to transmit the setting information (steps S12 and S4). If all of the other switches IC 30 have been requested to transmit the setting information (Yes at step S11), the first switch IC 30A switches to another communication route (step S13) and stops the first switching hub 1A from functioning (step S14). The first switch IC 30A then notifies the passenger using a warning lamp or the like that the first switching hub 1A has been stopped from functioning (step S15) and ends the process of reading the setting information.

If the first switch IC 30A has not failed to read the setting information from the first external memory 20A in step S2 described above (No at step S2), the process of reading the setting information is ended. Additionally, if the first switch IC 30A has not failed to read the setting information contained in the response frame F2 (No at step S10), the process of reading the setting information is ended.

As described above, the vehicle communication system 100 according to the embodiment includes the switching hubs 1. The vehicle communication system 100 includes, for example, the first switching hub 1A and the second switching hub 1B. The first switching hub 1A includes: the first switch IC 30A installed in the vehicle, connected to the devices 2, and configured to transfer information to each of the devices 2; and the first external memory 20A connected to the first switch IC 30A and capable of storing information therein. The second switching hub 1B includes: the second switch IC 30B installed in the vehicle, connected to the devices 3, and configured to transfer information to each of the devices 3; and the second external memory 20B connected to the second switch IC 30B and capable of storing information therein. The first and the second switching hubs 1A and 1B are connected to each other and have setting information stored in each of the first and the second external memories 20A and 20B. The setting information is applicable for setting the operation of the first and the second switch ICs 30A and 30B. When the first switching hub 1A fails to read the setting information applicable thereto and stored in the first external memory 20A in the first switching hub 1A, the first switching hub 1A operates based on the setting information applicable thereto acquired from the second external memory 20B.

In the vehicle communication system 100, this configuration enables the first switching hub 1A to operate based on the setting information applicable thereto acquired from the second external memory 20B even in a case when the first switching hub 1A fails to acquire the setting information applicable thereto stored in the first external memory 20A therein. In the vehicle communication system 100, this configuration enables the first switching hub 1A to operate based on the setting information applicable thereto acquired from the second external memory 20B even in a case when the second switching hub 1B fails to acquire the setting information applicable thereto stored in the first external memory 20A therein. Consequently, the vehicle communication system 100 is provided with a fail-safe that enables normal operation even when the external memory 20 is out of order, thereby being improved in reliability. In the vehicle communication system 100, the fail-safe described above can be implemented by use of electronic parts conventionally used, whereby increase in the number of parts is suppressed. As a result, the vehicle communication system 100 can be light-weight.

### Second Embodiment

Next, a vehicle communication system 100A according to a second embodiment is described. In the second embodiment, the same reference signs are used to indicate the same constituent elements as those in the first embodiment, and detailed description thereof is omitted. The vehicle communication system 100A is different from the vehicle communication system 100 according to the first embodiment in that, when errors in reading setting information occur in a plurality of certain memories, the setting information is acquired from the same one of the other external memories 20 upon occurrence of each error.

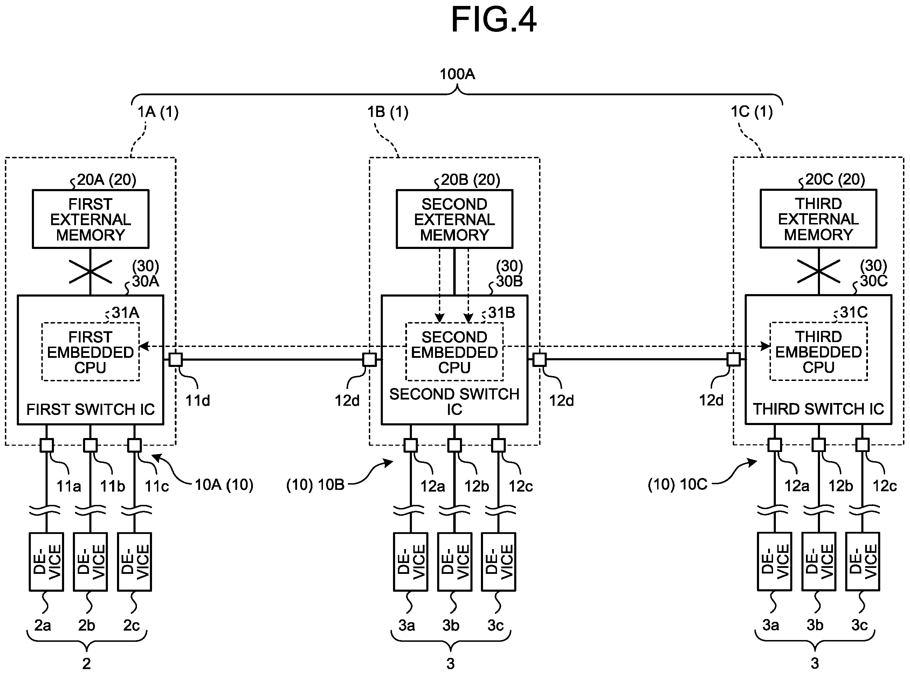

The vehicle communication system 100A includes the first switching hub 1A, the second switching hub 1B, a third switching hub 1C as illustrated FIG. 4. The second embodiment assumes that errors in reading setting information occur in the first switching hub 1A and the third switching hub 1C.

When an error in reading setting information applicable to the first switching hub 1A occurs therein, the first switching hub 1A transmits, to the second switching hub 1B, a request frame F1 indicating a request to transmit the setting information applicable thereto. Upon receiving the request frame F1 from the first switching hub 1A, the second switching hub 1B reads the setting information applicable to the first switch IC 30A and stored in the second external memory 20B. The second switching hub 1B then transmits, to the first switching hub 1A, a response frame F2 containing the read setting information applicable to the first switch IC 30A. The first switching hub 1A operates based on the setting information applicable thereto contained in the response frame F2 transmitted from the second switching hub 1B.

When an error in reading setting information applicable to the third switching hub 1C occurs therein, the third switching hub 1C transmits, to the second switching hub 1B, a request frame F1 indicating a request to transmit the applicable setting information. Upon receiving the request frame F1 from the third switching hub 1C, the second switching hub 1B reads the setting information applicable to a third switch IC 30C and stored in the second external memory 20B. The second switching hub 1B then transmits, to the third switching hub 1C, a response frame F2 containing the read setting information applicable to the third switch IC 30C. The third switching hub 1C operates based on the setting information applicable thereto contained in the response frame F2 transmitted from the second switching hub 1B.

Thus, in the vehicle communication system 100A, the switching hubs 1 include two or more acquirement-disabled switching hubs 1 that cannot acquire setting information applicable thereto and stored in the external memories 20 therein, and includes at least one acquirement-enabled transfer unit that can acquire setting information applicable thereto and stored in the external memory 20 therein. In this case, in the switching hubs 1, the two or more acquirement-disabled switching hubs 1 operate based on the setting information applicable thereto acquired from the external memory 20 in the same acquirement-enabled switching hub 1. In the vehicle communication system 100A, this configuration enables a load imposed on the entire system to be distributed, for example, by causing one of the switching hubs 1 that has a relatively small transfer processing load imposed thereon to transmit setting information to the other switching hubs 1. In the vehicle communication system 100A, the switching hub 1 that has a relatively small transfer processing load imposed thereon may be previously identified. Alternatively, the switching hub 1 that has a relatively small transfer processing load imposed thereon may be determined based on the result of detection of respective transfer processing loads imposed on the switching hubs 1.

### Third Embodiment

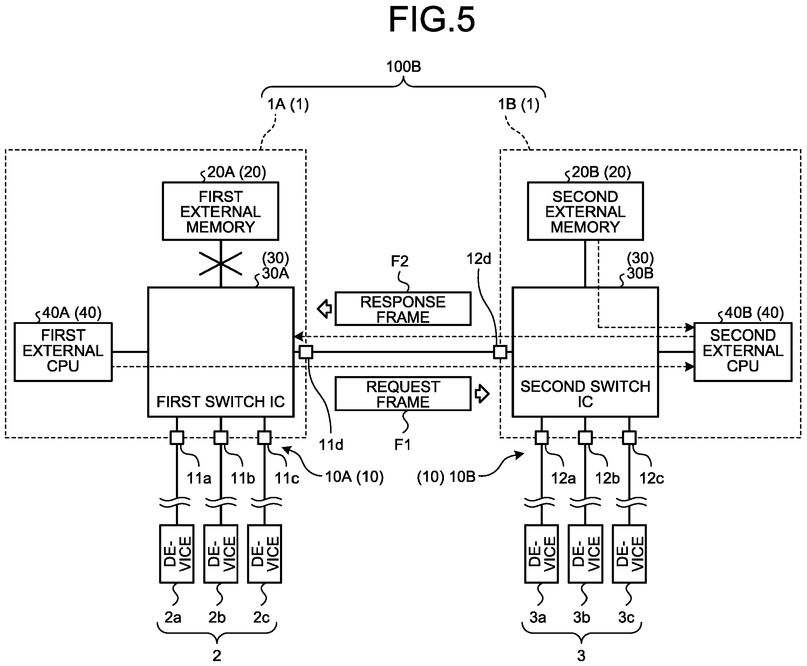

Next, a vehicle communication system 100B according to a third embodiment is described. In the third embodiment, the same reference signs are used to indicate the same constituent elements as those in the first embodiment, and detailed description thereof is omitted. The vehicle communication system 100B is different from the vehicle communication system 100 according to the first embodiment in that the switching hubs 1 include respective external CPUs 40. The first switching hub 1A includes the first input-output interface 10A, the first external memory 20A, the first switch IC 30A, and a first external CPU 40A as illustrated FIG. 5. The first external CPU 40A is provided outside the first switch IC 30A and is connected via a connecting line to the first switch IC 30A. The first external CPU 40A has a higher processing capacity than the first embedded CPU 31A in the first switch IC 30A. For example, it is preferable that the first external CPU 40A have a higher clock frequency with which the corresponding CPU operates than the first embedded CPU 31A, have a higher number of CPU cores than the first embedded CPU 31A, and have a larger cache memory capacity than the first embedded CPU 31A.

The second switching hub 1B includes the second input-output interface 10B, the second external memory 20B, the second switch IC 30B, and a second external CPU 40B. The second external CPU 40B is provided outside the second switch IC 30B and is connected via a connecting line to the second switch IC 30B. The second external CPU 40B has a higher processing capacity than the second embedded CPU 31B in the second switch IC 30B. For example, it is preferable that the second external CPU 40B have a higher clock frequency with which the corresponding CPU operates than the second embedded CPU 31B, have a higher number of CPU cores than the second embedded CPU 31B, and have a larger cache memory capacity than the second embedded CPU 31B.

In the first and the second switching hubs 1A and 1B thus configured, the first external CPU 40A reads setting information applicable thereto from the first external memory 20A when the first switching hub 1A is started up. If the first external CPU 40A fails to read the setting information applicable thereto from the first external memory 20A when the first switching hub 1A is started up, the first external CPU 40A transmits, to the second switching hub 1B, a request frame F1 indicating a request to transmit the setting information applicable thereto. Upon receiving the request frame F1 from the first switching hub 1A, the second external CPU 40B of the second switching hub 1B reads the setting information stored in the second external memory 20B and applicable to the first switch IC 30A. The second external CPU 40B then transmits, to the first switching hub 1A, a response frame F2 containing the read setting information applicable to the first switch IC 30A. The first external CPU 40A in the first switching hub 1A applies the applicable setting information to the first switch IC 30A contained in the response frame F2 transmitted from the second switching hub 1B. As in the case of the vehicle communication system 100B according to the third embodiment, the applicable setting information may be acquired by the corresponding external CPU 40.

### Modifications

Modifications of the embodiments are described next. An example in which the first and the second external memories 20A and 20B have the setting information applicable to all of the switches IC 30 included in the vehicle communication system 100 is described above. However, this example is not limiting. For example, the first external memory 20A may be configured to store therein, out of the setting information applicable to all of the switches IC 30 included in the vehicle communication system 100, the setting information applicable to some of those switches IC 30. In that case, for example, the vehicle is configured to have the internal space thereof segmented into a plurality of regions. The regions include a unit region that includes two or more of the switching hubs 1. Each of the switching hubs 1 included in this unit region stores therein the setting information applicable to that switching hub 1 and the other switching hub or hubs 1 in this unit region and does not store therein the setting information applicable to the other switching hubs 1 in the other region or regions. In one of the unit regions, for example, the first switching hub 1A and the second switching hub 1B are included. The first switching hub 1A included in this unit region stores therein the setting information applicable thereto and to the second switching hub 1B in this unit region and does not store therein the setting information applicable to the other switching hubs 1 in the other region or regions. This configuration can prevent capacities needed for the respective external memories 20 of the switching hubs 1 from being increased in the vehicle communication system 100.

The present description illustrates an example in which the transfer unit is the switching hub 1 that transfers information to a specific port based on the routing table. However, this example is not limiting. For example, the transfer unit may be a hub that transfers information to all corresponding ports.

In a vehicle communication system according to the embodiments, when a transfer unit fails to acquire setting information applicable thereto from a storage section therein, the transfer unit is enabled to operate based on the setting information applicable thereto acquired from a storage section in another transfer unit, whereby the reliability of the vehicle communication system can be prevented from degrading.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A vehicle communication system (100, 100A, 100B) comprising:
a plurality of transfer units (1) each including
a transfer section (30) installed in a vehicle, connected to a device (2 and 3), and configured to transfer information to the device (2 and 3), and
a storage section (20) connected to the transfer section (30) and capable of storing information therein, wherein
the transfer units (1) are connected to one another, each of the transfer units (1) stores, in the storage section (20) of that transfer unit (1), setting information needed for putting the transfer sections (30) in that transfer unit (1) and at least one of the other transfer units (1) into operation, the setting information needed for putting the transfer sections (30) in that transfer unit (1) into operation being read from said storage section (20) during startup of the respective transfer unit (1), and that transfer unit (1) operates based on the setting information applicable to that transfer unit (1) that has been acquired from the storage section (20) in the other transfer units (1) when failing to acquire the applicable setting information stored in the storage section (20) in that transfer unit (1).

2. The vehicle communication system (100, 100A, 100B) according to claim 1, wherein
the vehicle is segmented into a plurality of regions,
the regions include a unit region that is a region including two or more of the transfer units (1), and
each of the transfer units (1) included in the unit region stores therein the setting information applicable to that transfer unit (1) and the other transfer unit or units (1) in the unit region and does not store therein any of the setting information applicable to the other transfer units (1) in the other regions.

3. The vehicle communication system (100A) according to claim 1 or 2, wherein when the transfer units (1) include a plurality of acquirement-disabled transfer units (1) that are not enabled to acquire the setting information applicable to and stored in the storage sections (20) in these acquirement-disabled transfer units (1) and include at least one acquirement-enabled transfer unit (1) that is enabled to acquire the setting information applicable to and stored in that acquirement-enabled transfer unit (1), each of the plurality of acquirement-disabled transfer units (1) operates based on the setting information applicable to that acquirement-disabled transfer unit (1) and acquired from the storage section (20) in the same one of the at least one acquirement-enabled transfer unit (1).

## Patentansprüche

1. Fahrzeugskommunikationssystem (100, 100A, 100B), umfassend:
eine Mehrzahl von Übertragungseinheiten (1), deren jede enthält:
einen in einem Fahrzeug installierten Übertragungsabschnitt (30), verbunden mit einem Gerät (2 und 3) und eingerichtet, um Information an das Gerät (2 und 3) zu übertragen und
einen Speicherabschnitt (20), verbunden mit dem Übertragungsabschnitt (30) und geeignet, um darin Information zu speichern, wobei
die Übertragungseinheiten (1) miteinander verbunden sind, jede der Übertragungseinheiten (1), in dem Speicherabschnitt (20) dieser Übertragungseinheit (1), Einstellinformation speichert, die für die Inbetriebsetzung der Übertragungsabschnitte (30) in dieser Übertragungseinheit (1) und wenigstens einer der anderen Übertragungseinheiten (1) erforderlich ist, wobei die für die Inbetriebsetzung der Übertragungsabschnitte (30) in dieser Übertragungseinheit (1) erforderliche Einstellinformation aus dem Speicherabschnitt (20) während der Inbetriebsetzung der jeweiligen Übertragungseinheit (1) gelesen wird und diese Übertragungseinheit (1) beruhend auf der für diese Übertragungseinheit (1) anwendbaren Einstellinformation arbeitet, die von dem Speicherabschnitt (20) in den anderen Übertragungseinheiten (1) beschafft wurden, wenn das Beschaffen der in dem Speicherabschnitt (20) in dieser Übertragungseinheit (1) gespeicherten anwendbaren Speicherinformation fehlschlägt.

2. Fahrzeugskommunikationssystem (100, 100A, 100B) nach Anspruch 1, wobei
das Fahrzeug in eine Mehrzahl von Bereichen unterteilt ist,
die Bereiche einen Einheitsbereich enthalten, der ein Bereich ist, der zwei oder mehr der Übertragungseinheiten (1) enthält und
in jeder der in dem Einheitsbereich enthaltenen Übertragungseinheiten (1) die für diese Übertragungseinheiten (1) und die andere(n) Übertragungseinheit(en) (original: transfer unit or units) (1) in dem Einheitsbereich anwendbare Einstellinformation gespeichert ist und keine für die anderen Übertragungseinheiten (1) in den anderen Bereichen anwendbare Einstellinformation gespeichert ist.

3. Fahrzeugskommunikationssystem (100A) nach Anspruch 1 oder 2, wobei wenn die Übertragungseinheiten (1) eine Mehrzahl von beschaffungsuntauglichen Übertragungseinheiten (1) einschließen, die nicht befähigt sind, die in den Speicherabschnitten (20) in diesen beschaffungsuntauglichen Übertragungseinheiten (1) gespeicherte und für diese anwendbare Einstellinformation zu beschaffen, und wenigstens eine beschaffungstaugliche Übertragungseinheit (1) einschließen, die befähigt ist, die in dieser beschaffungstauglichen Übertragungseinheit (1) gespeicherte und für diese anwendbare Einstellinformation zu beschaffen, jede der Mehrzahl von beschaffungsuntauglichen Übertragungseinheiten (1) beruhend auf der für diese beschaffungsuntaugliche Übertragungseinheit (1) anwendbare und von dem Speicherabschnitt (20) in der selben der wenigstes einen beschaffungstauglichen Übertragungseinheit (1) beschafften Einstellinformation arbeitet.

## Revendications

1. Système de communication de véhicule (100, 100A, 100B) comprenant :
une pluralité d'unités de transfert (1) comportant chacune
une section de transfert (30) installée dans un véhicule, connectée à un dispositif (2 et 3) et configurée pour transférer des informations au dispositif (2 et 3), et
une section de stockage (20) connectée à la section de transfert (30) et capable d'y stocker des informations, où
les unités de transfert (1) sont connectées les unes aux autres, chacune des unités de transfert (1) stocke, dans la section de stockage (20) de cette unité de transfert (1), des informations de réglage nécessaires pour mettre les sections de transfert (30) dans cette unité de transfert (1) et au moins l'une des autres unités de transfert (1) en service, les informations de réglage nécessaires pour mettre en service les sections de transfert (30) dans cette unité de transfert (1) étant lues à partir de ladite section de stockage (20) pendant le démarrage de l'unité de transfert respective (1), et cette unité de transfert (1) fonctionne sur la base des informations de réglage applicables à cette unité de transfert (1) qui ont été acquises à partir de la section de stockage (20) dans les autres unités de transfert (1) en cas d'échec de l'acquisition des informations de réglage applicables stockées dans la section de stockage (20) dans cette unité de transfert (1).

2. Système de communication de véhicule (100, 100A, 100B) selon la revendication 1, dans lequel
le véhicule est segmenté en une pluralité de régions,
les régions comportent une région d'unité qui est une région comportant deux, ou plus, des unités de transfert (1), et
chacune des unités de transfert (1) incluses dans la région d'unité y stocke les informations de réglage applicables à cette unité de transfert (1) et à l'autre ou aux autres unité(s) de transfert (1) dans la région d'unité et n'y stocke aucune des informations de réglage applicables aux autres unités de transfert (1) dans les autres régions.

3. Système de communication de véhicule (100A) selon la revendication 1 ou 2, dans lequel, lorsque les unités de transfert (1) comportent une pluralité d'unités de transfert à acquisition désactivée (1) qui ne sont pas activées pour acquérir les informations de réglage applicables aux sections de stockage (20) et stockées dans celles-ci dans ces unités de transfert à acquisition désactivée (1) et comportent au moins une unité de transfert à acquisition activée (1) qui est activée pour acquérir les informations de réglage applicables à cette unité de transfert à acquisition activée (1) et stockées dans celle-ci, chacune de la pluralité d'unités de transfert à acquisition désactivée (1) fonctionne sur la base des informations de réglage applicables à cette unité de transfert à acquisition désactivée (1) et acquises à partir de la section de stockage (20) dans la même unité de l'au moins une unité de transfert à acquisition activée (1).
